# NOUVEAU FASCICULE DE BREVET EUROPEEN

(11) **EP 0 872 276 B2**
(45) Date de publication et mention de la décision concernant l'opposition: **23.03.2005**
(45) Mention de la délivrance du brevet: 06.03.2002
(21) Numéro de dépôt: 98400847.4
(22) Date de dépôt: 07.04.1998
(51) Int. Cl.: B01J 23/96, B01J 38/44, C10G 35/12

(54) **Procédé et enceinte de régénération d'un catalyseur de production d'aromatiques ou de reformage avec oxychloration améliorée**
Verfahren und Gehäuse für die Regenerierung eines Katalysators für die Herstellung von aromatischen Verbindungen und für Reformierung mit verbesserten Oxychlorierungseigenschaften
Regeneration enclosure and process for the regeneration of a catalyst for aromatics production or reforming with improved oxychlorination ability

(30) Priorité: 14.04.1997 FR 9704662
(43) Date de publication de la demande: 21.10.1998
(73) Titulaire: Institut Français du Pétrole, 92500 Rueil Malmaison (FR)
(72) Inventeur: Capelle, Marianne, 69360 Ternay (FR); Deves, Jean-Marie, 78540 Vernouillet (FR); Hoffmann, Frédéric, 78800 Houilles (FR); Thery, Michel, 69390 Vernaison (FR)
(74) Mandataire: Hartmann, Günter, Dr. Dipl.-Chem.

(56) Documents cités:
- EP-A- 0 378 482
- EP-A- 0 710 502
- FR-A- 2 642 330
- US-A- 3 134 732
- US-A- 3 692 496
- US-A- 3 935 244
- US-A- 4 097 368
- US-A- 4 687 637
- US-A- 4 872 970
- US-A- 5 001 095
- US-A- 5 034 117
- US-A- 5 053 371
- US-A- 5 151 392
- US-A- 5 457 077
- J.Chem.Tech.Biotechnol.1993,58,pages 135-139,Scelza et al: Regulation of the chlorine content in fresh, regenerated and coked PtRe/Al203 catalysts
- Applied catalysis, 6(1983),pages 347-353; Castro et al.: Chlorine adjustment in Al203 and HAphtha reforming catalyst
- Chemical engineering progress, 1952, vol.48,no.6, Arnold et al.: Thermodynamics of the Deacon process, pages 293-296

## Description

L'invention concerne les procédés en lit mobile pour la production d'hydrocarbures aromatiques, et notamment le reformage. Elle concerne plus particulièrement l'étape d'oxychloration utilisée lors de la régénération du catalyseur usé et destinée à lui rendre ses performances catalytiques initiales.

Le catalyseur comprend généralement un support (par exemple formé d'au moins un oxyde réfractaire, le support peut également inclure une ou plusieurs zéolites), au moins un métal noble (le platine de préférence), et de préférence au moins un métal promoteur (par exemple l'étain ou le rhénium), au moins un halogène et éventuellement un ou plusieurs éléments additionnels (tels que alcalins, alcalino-terreux, lanthanides, silicium, éléments du groupe IV B, métaux non nobles, éléments du groupe III A, etc.). Les catalyseurs de ce type contiennent, par exemple, du platine et au moins un autre métal déposés sur un support alumine chlorée. D'une manière générale, ces catalyseurs sont utilisés pour la conversion d'hydrocarbures naphténiques ou paraffiniques, susceptibles de se transformer par déshydrocyclisation et/ou déshydrogénation, dans le reformage ou pour la production d'hydrocarbures aromatiques (par exemple production de benzène, toluène, ortho-, méta- ou paraxylènes). Ces hydrocarbures proviennent du fractionnement des pétroles bruts par distillation ou d'autres procédés de transformation.

Ces catalyseurs sont largement décrits dans la littérature.

Un des moyens pour augmenter les rendements de ces procédés de reformage ou de production d'aromatiques, est de diminuer les pressions opératoires auxquelles s'effectuent les différentes réactions intéressantes. Par exemple, il y a 30 ans les réactions de reformage s'effectuaient à 40 bars ; il y a 20 ans, à 15 bars. Aujourd'hui, il est courant de voir des réacteurs de reformage fonctionnant à des pressions inférieures à 10 bars, notamment comprises entre 3 et 8 bars.

L'amélioration des réactions bénéfiques due à la baisse de pression s'accompagne d'une désactivation plus rapide du catafyseurparcokage. Le coke, composé de poids moléculaire élevé et constitué essentiellement de carbone et d'hydrogène, se dépose sur les sites actifs du catalyseur. Le rapport molaire H/C du coke formé varie d'environ 0,3 à 1,0. Les atomes de carbone et d'hydrogène forment des structures poly-aromatiques condensées dont le degré d'organisation cristalline est variable en fonction de la nature du catalyseur et des conditions de fonctionnement des réacteurs. Bien que la sélectivité de transformation des hydrocarbures en coke soit très faible, les teneurs en coke accumulé sur le catalyseur peuvent être importantes. Typiquement, pour les unités à lit fixe, ces teneurs sont comprises entre 2,0 et 20,0 à 25,5 % poids. Pour les unités à lit circulant, ces teneurs sont inférieures à 10,0 % poids.

Le dépôt de coke, plus rapide à basse pression, nécessite une régénération également plus rapide du catalyseur. Les cycles de régénération actuels peuvent descendre jusqu'à 2-3 jours.

Le brevet EP-A-0.378.482 de la demanderesse expose un procédé de régénération en continu d'un catalyseur de reformage ou de production d'aromatiques, qui permet de pallier aux inconvénients inhérents à ces cycles de plus en plus courts. Une des étapes de la régénération est l'oxychloration du catalyseur. La présente invention concerne cette étape.

Selon le brevet EP-A-0.378.482, le catalyseur usé chemine progressivement de haut en bas dans une enceinte de régénération où il rencontre successivement une première zone à lit mobile et radiale de combustion, une deuxième zone à lit mobile et radiale de combustion, une zone à lit mobile axiale d'oxychloration et une zone à lit mobile axiale de calcination, et
(a) dans la première zone de combustion, le catalyseur est traité sous une pression de 3 à 8 bars sensiblement égale à celle qui règne dans le premier réacteur de réformage, à une température comprise entre 350 et 450 °C par un gaz de combustion à base d'un gaz inerte circulant à co-courant du catalyseur, renfermant 0,01 à 1 % d'oxygène en volume, ce gaz de combustion provenant d'une zone de lavage des gaz issus de la combustion, de l'oxychloration et de la calcination.
(b) dans la deuxième zone de combustion, le catalyseur est traité sous une pression de 3 à 8 bars sensiblement égale à celle qui règne dans ledit premier réacteur à une température supérieure d'au moins 20 °C à la température qui règne dans la première zone de combustion, en présence des gaz en provenance de la première zone de combustion et en présence d'un gaz inerte d'appoint auquel on ajoute jusqu'à 20 % en volume d'oxygène de façon à ce que le catalyseur soit au contact d'un gaz renfermant 0,01 à 1 % d'oxygène en volume, ces gaz circulant à co-courant du catalyseur.
(c) les gaz de brûlage sont évacués de la deuxième zone de combustion et sont envoyés vers une boucle de lavage après avoir été préalablement mélangés aux gaz soutirés de la zone d'oxychloration et de la zone de calcination.
(d) dans la zone axiale d'oxychloration, le catalyseurest traité à co-courant par un mélange d'un gaz en provenance de la zone de calcination et dudit gaz chloré pendant 30 à 60 mn, le dit mélange formant un gaz d'oxychloration renfermant 4 à 10 % en volume d'oxygène, sous une pression de 3 à 8 bars ; la teneur en eau est de l'ordre de 500-7000 ppm, sans eau ajoutée, elle provient du gaz issu de la combustion, lavé et séché qui est utilisé en partie pour l'oxychloration, mais aussi essentiellement de la calcination.
(e) dans la zone axiale de calcination, le catalyseur est traité pendant 45 à 80 mn à contre-courant entre 350 et 550 °C sous une pression comprise entre 3 et 8 bars, par une partie des gaz en provenance de la boucle de lavage et d'une zone de séchage, ne refermant pas plus de 100 ppm d'eau.

De nombreux brevets traitant de la régénération de ces catalyseurs existent. On peut citer notamment les brevets US-4,980,325 et US-5,053,371. Dans ces procédés, les zones d'oxychloration et de combustion sont séparées de façon à laisser passer le catalyseur mais pas les gaz, et il existe une boucle de recyclage des gaz issus de l'oxychloration. Dans le brevet US-5,053,371, il est décrit des conditions opératoires : 3-25 % d'oxygène dans le gaz introduit en oxychloration, une teneur en chlore dans la zone d'oxychloration de l'ordre de 500 ppm mole et une teneur en eau faible qui provient du catalyseur et du gaz issu de la calcination. Dans le brevet US-4,980,325, l'oxygène provient uniquement du gaz enrichi en oxygène qui est introduit en calcination.

Le brevet EP-378,482 décrit un procédé régénératif continu avec circulation du catalyseur entre les différentes étapes, dans lequel l'oxychloration est conduite en présence du gaz remontant de la zone de combustion, et une addition d'agent chlorant est prévue au niveau de la zone d'oxychloration.

Le brevet EP-710,502 montre la régénération hors site d'un catalyseur. Chaque étape (combustion, oxychloration, calcination) est mise en oeuvre séparement, et par exemple dans un four à lit mobile. L'oxychloration est effectuée en atmosphère d'air humide (0,1-10 % vol. eau) et en présence d'un composé halogéné.

Les inventeurs ont constaté que ces conditions opératoires de l'étape d'oxychloration, si elles permettent de réintroduire du chlore sur le catalyseur n'assurent néanmoins pas une bonne redispersion de la phase bimétallique. Il en résulte une dégradation du comportement catalytique dans le temps.

Par ailleurs, il a été recherché une gestion des gaz permettant de contrôler précisément les conditions opératoires de l'étape d'oxychloration, et également de préférence celles de l'étape de calcination.

Le procédé et le dispositif selon l'invention répondent à ces objectifs.

Plus précisément, le procédé selon l'invention est un procédé de régénération de calcination il est introduit un gaz contenant de l'oxygène et moins de 50 ppm mole d'eau d'un catalyseur de production d'hydrocarbures aromatiques ou de reformage, comprenant un support, au moins un métal noble et du chlore, et comprenant les étapes successives de combustion, oxychloration et calcination, procédé dans lequel il est introduit pour l'étape d'oxychloration au moins un agent chlorant, au moins un gaz contenant de l'oxygène, et de l'eau tel que le rapport molaire H₂O/HCl soit de 3 à 50, et l'étape d'oxychloration se déroule en présence d'un gaz d'oxychloration contenant moins de 21 % d'oxygène et au moins 50 ppm poids de chlore (calculé HCl), et à une température de 350-600 °C et de préférence de 350-550 °C, et dans la zone de calcination il est introduit un gaz contenant de l'oxygène et moins de 50 ppm mole d'eau.

Le procédé se déroule en lit mobile ou avec des écoulements intermittents du catalyseur (dans ce cas, chaque étape peut se dérouler dans au moins une zone différente, le catalyseur s'écoulant d'une zone à l'autre).

La régénération débute par une étape de combustion de la matière carbonée. Elle est suivie d'une étape d'oxychloration puis d'une étape de calcination.

Les gaz issus de la combustion et les gaz issus de l'oxychloration sont extraits séparément du procédé de régénération, de façon générale. Pour éviter le mélange de ces gaz, il est avantageusement disposé une plaque ou autre moyen pour séparer les zones de combustion et d'oxychloration dans les procédés en lit mobile. Par contre, dans ces procédés en lit mobile, les gaz issus de la calcination peuvent généralement passer librement dans la zone d'oxychloration.

En lit mobile, le catalyseur ayant subi l'étape de combustion est prêt pour être soumis à une étape d'oxychloration. Elle se déroule dans une ou plusieurs zones, de type axial ou radial. Il est introduit dans la zone d'oxychloration au moins un agent chlorant, au moins un gaz contenant de l'oxygène, et de l'eau. L'agent chlorant peut être du chlore, HCl, ou un hydrocarbure halogéné contenant moins de 4 atomes de carbone, et de 1 à 6 atomes de chlore (par exemple CCl₄) ou tout agent chlorant connu dans ces procédés de régénération pour libérer du chlore. Il est introduit de préférence avec le gaz contenant de l'oxygène. Dans les procédés en lit mobile, on l'introduira avantageusement dans la partie inférieure de la zone d'oxychloration pour qu'il s'écoule à contre-courant du catalyseur, lorsque la zone d'oxychloration est axiale.

La quantité d'agent chlorant introduit est telle que la concentration en chlore (calculé HCl) dans le gaz au contact du catalyseur dans la zone d'oxychloration appelé gaz d'oxychloration (c'est-à-dire pour les procédés en lit mobile le gaz introduit dans la zone d'oxychloration + le gaz en provenance de la zone de calcination) soit d'au moins 50 ppm poids, en général de 50-8000 ppm poids, avantageusement supérieure à 650 ppm poids, et de façon préférée comprise entre 1000 et 8000 ppm poids. On préférera également, pour des raisons technologiques, (liées à la corrosion par exemple ou au traitement ultérieur des gaz chlorés), travailler à des teneurs ne dépassant pas 4000 ou 5000 ppm poids.

Il est également introduit dans la zone d'oxychloration au moins un gaz contenant de l'oxygène. Avantageusement, ce gaz comprend une partie des gaz issus de l'étape de combustion, lavée et séchée de préférence, additionnée d'un appoint en oxygène, par de l'air par exemple. Dans les procédés à lit mobile avec zone axiale d'oxychloration, ce gaz circule de préférence à contre-courant du catalyseur.

Le catalyseur est dans la zone d'oxychloration au contact du gaz ainsi introduit et dans le cas des lits mobiles, au contact également du gaz en provenance de la zone de calcination, chargé encore en oxygène et contenant un peu d'eau résultant de la calcination. La teneur en oxygène du gaz d'oxychloration est inférieure à 21 % (volume). Elle est généralement au dessus de 10 % volume.

On observera que selon l'invention, dans une réalisation des procédés en lit mobile, et contrairement à l'art antérieur EP-A. 0 378 482, il est introduit dans l'étape d'oxychloration (la zone d'oxychloration axiale par exemple) au moins un gaz contenant de l'oxygène, indépendamment du gaz contenant de l'oxygène introduit dans l'étape de calcination (la zone de calcination axiale par exemple).

Il peut également être envisagé sans'sortir de l'invention, et en ce qui concerne les lits mobiles, de n'introduire dans l'étape d'oxychloration que l'agent chlorant et l'eau, la bonne répartition du chlore et de l'eau étant alors plus délicate à obtenir, le gaz contenant de l'oxygène provenant alors uniquement de la zone de calcination.

De façon nouvelle par rapport au brevet EP-A. 0 378 482, de l'eau est introduite dans l'étape d'oxychloration. Elle est avantageusement amenée en mélange avec le gaz contenant de l'oxygène introduit.

La quantité d'eau ainsi introduite est dans le rapport molaire H₂O/HCl de 3 à 50, et de préférence il est de 4 à 50, ou de 4 à 30, avantageusement de 7 à 50 et plus préférentiellement de 7 à 30. L'eau est amenée sous forme liquide ou de préférence sous forme vapeur. Le gaz d'oxychloration est ainsi très chargé en eau, et sa teneur en eau est supérieure à 7000 ppm, et généralement elle est d'au moins 8000 ppm voire 10000 ppm poids, et de préférence supérieure à 10000 ppm poids.

La redispersion du métal noble est obtenue en présence d'oxygène, de chlore et d'eau dans les conditions énoncées, et à des températures dans l'étape d'oxychloration de 350-600 °C, de préférence 350-550 °C, mais le plus souvent d'au moins 450 °C, et préférentiellement entre 490 et 530 °C. Le temps de séjour du catalyseur dans l'étape d'oxychloration est inférieur souvent à 2 h et il s'établit généralement entre 45 mn et 2 h.

La pression régnant dans cette zone doit être équilibrée avec les pressions des zones adjacentes dans le cas de circulation de catalyseur, et à 3-8 bars pour les procédés en lit mobile de régénération de catalyseur fonctionnant dans des procédés de reformage à faible pression.

Dans un mode préféré de réalisation des procédés en lit mobile, le gaz d'oxychloration résulte du mélange du gaz provenant de la zone dans laquelle se déroule l'étape de calcination, avec l'(les) agent(s) chlorant(s), l'eau et le(s) gaz contenant de l'oxygène introduits dans la zone dans laquelle se déroule l'étape d'oxychloration, le(s) gaz contenant de l'oxygène comprenant une partie des gaz issus de la combustion additionnée d'un appoint en oxygène, et que le gaz introduit dans la zone de calcination est de l'air ou un gaz formé d'une partie des gaz issus de la combustion lavée, séchée et additionnée d'un appoint en oxygène.

Dans ces procédés en lit mobile, le gaz d'oxychloration contient également du gaz en provenance de la zone de calcination ; dans cette zone de calcination, il est introduit un gaz contenant de l'oxygène et moins de 50 ppm mole d'eau.

Le gaz contenant de l'oxygène peut être de l'air. De façon avantageuse, ce gaz comprend une partie du gaz issu de l'étape de combustion, lavé et séché, et additionné d'un appoint d'oxygène (air). Dans ce cas avantageux, la teneur en oxygène du gaz introduit pour l'étape de calcination est inférieure à 21 % volume. D'une façon générale, la teneur en oxygène du gaz introduit pour l'étape de calcination est d'au plus 21 % volume.

La température de l'étape de calcination est comprise, de façon connue, entre 350 et 600 °C, et de préférence 350-550 °C. Le gaz contenant de l'oxygène circule à contre-courant du catalyseur dans les procédés à lit mobile avec zone de calcination axiale. Généralement, le temps de séjour est inférieur à 1 h.

Afin de pouvoir contrôler strictement les conditions opératoires dans la zone d'oxychloration, on opère de préférence sans recyclage des gaz d'oxychloration.

L'absence de recyclage permet également un contrôle plus précis du taux d'oxygène, et permet d'atteindre des teneurs élevées en oxygène (absence de dilution) de façon économique. Mais des modes de réalisation peuvent inclure le recyclage.

En l'absence de recyclage (cas préféré), le gaz d'oxychloration (ou la purge de ce gaz s'il y a recyclage) sortant de la zone d'oxychloration est rejeté hors de l'installation (dans l'atmosphère par exemple) après traitement pour éliminer au moins les impuretés chlorées.

On a également intérêt à sécher le gaz issu de la combustion amené dans la zone d'oxychloration, lorsque cela est le cas, de façon à maîtriser la quantité d'eau présente dans le gaz d'oxychloration à partir de la quantité d'eau ajoutée. Ce séchage peut être effectué sur le gaz extrait de la combustion avant son fractionnement pour amener une partie en zone d'oxychloration, ou bien sur la partie fractionnée. L'air est également de préférence séché.

Dans les conditions du procédé selon l'invention, il est obtenu une amélioration notable de la redispersion de la phase métallique du catalyseur, par rapport à l'art antérieur, comme le montrera l'exemple.

L'état de dispersion de la phase métallique du catalyseur est déterminée quantitativement par la technique de chimisorption H₂/O₂.

L'invention concerne également une enceinte, pour mettre en oeuvre le procédé selon l'invention.

L'enceinte selon l'invention est une enceinte pour la régénération de catalyseur de reformage ou de production d'aromatiques renfermant un support, au moins un métal noble et du chlore, le catalyseur étant sous forme de lit mobile, ladite enceinte comportant au moins une zone de combustion (A) munie d'au moins une conduite (9) pour l'introduction de gaz contenant de l'oxygène et d'au moins une conduite (5) pour l'évacuation des gaz issus de la combustion, au moins une zone d'oxychloration (B) et au moins une zone de calcination (C) munie d'au moins une conduite (18) pour l'introduction d'un gaz contenant de l'oxygène, ladite enceinte comportant également au moins une conduite (1) pour l'introduction du catalyseur dans l'enceinte, au moins une conduite (3) pour l'introduction du catalyseur issu de la combustion dans la zone suivante d'oxychloration (B), et au moins une conduite (21) pour l'évacuation des gaz issus de l'oxychloration, enceinte caractérisée en ce que la zone d'oxychloration comprend au moins un moyen (17) pour introduire un gaz contenant de l'oxygène, moyen dans lequel arrivent au moins une conduite (19) amenant au moins un agent chlorant et au moins une conduite (20) amenant l'eau, de façon à ce qu'il entre par la conduite (17) dans la zone d'oxychloration un gaz comprenant l'eau, au moins un agent chlorant et de l'oxygène, et qu'il est déposé une plaque ou autre moyen pour séparer les zones de combustion et d'oxychloration pour éviter le mélange des gaz issus de la combustion et des gaz issus de l'oxychloration.

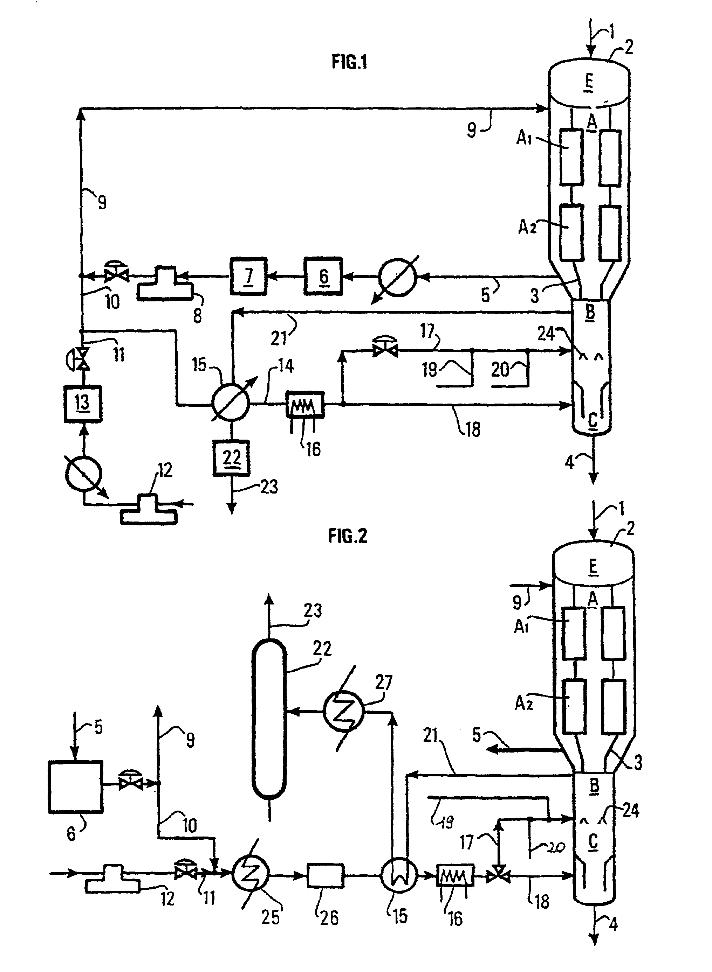

Les figures 1 et 2 représentent deux modes de réalisation de l'invention.

L'invention sera décrite à partir de la figure 1 montrant un mode de réalisation préféré de l'invention.

Le catalyseur circulant continûment dans le régénérateur, son trajet s'effectue comme suit : le catalyseur usé entrant dans le régénérateur par une conduite (1) en tête de l'enceinte (E) passe dans une zone tampon (2) puis descend par gravité dans les zones de combustion (A1) (A2) dans lesquelles se déroule l'étape de combustion. Peu importe le nombre de zones de combustion pour la réalisation de l'invention. Il suffit d'au moins une zone de combustion (A).

Après avoir subi la combustion, le catalyseur à faible teneur en matière carbonée arrive dans la zone d'oxychloration (B) en passant dans des conduites ou jambes (3). Puis il s'écoule vers la zone de calcination (C) et ressort de l'enceinte par les conduites (4).

La figure 1 montre une zone d'oxychloration et une zone de calcination, plusieurs sont possible. Ces zones sont très avantageusement de type axial.

Entre les zones d'une part de combustion et d'autre part d'oxychloration, on peut avantageusement disposer une plaque ou tout autre moyen de séparation des zones permettant de laisser passer le catalyseur mais pas les gaz.

Par contre, les gaz circulent librement de la zone de calcination vers la zone d'oxychloration. En fait, sur la figure 1, on a un seul lit de catalyseur pour la calcination et l'oxychloration. L'invention peut employer des lits distincts avec circulation des gaz et du catalyseur.

Les gaz issus de la combustion sont évacués par au moins une conduite (5) qui débouche dans la zone de lavage (6). Les gaz sont lavés puis séchés dans un sécheur (7), purgés si besoin puis comprimés dans un compresseur (8). Une partie de ces gaz est recyclée par la conduite (9) vers la (les)zone(s) de combustion (A), après addition d'oxygène, tandis que l'autre partie des gaz passe par la conduite (10).

Un appoint en oxygène sec (sécheur 13 précédé d'un refroidisseur) est additionné au gaz dans la conduite (10) par l'intermédiaire d'une conduite (11) reliée à un compresseur (12) qui assure un débit d'air par exemple, réglé grâce par exemple à une vanne, en fonction du taux d'oxygène requis dans le gaz. Il est obtenu dans la conduite (14) un gaz contenant de l'oxygène. Le gaz est avantageusement préchauffé dans l'échangeur (15), avant de passer dans un four (16).

Selon la réalisation préférée de la figure 1, une partie de ce gaz alimente directement la zone d'oxychloration par la conduite (17), tandis que l'autre partie alimentera la zone de calcination par la conduite (18). L'injection du gaz dans la zone d'oxychloration se fait après avoir ajouté une quantité contrôlée de vapeur d'eau par au moins une conduite (19) et une quantité contrôlée d'agent chlorant par au moins une conduite (20).

Les conduites (17) et (18) arrivent dans la partie inférieure de chacune des zones axiales de façon à produire un contre-courant gaz-solide. Au niveau de la conduite (17), on dispose avantageusement dans le lit catalytique au moins un déflecteur (24) pour une bonne répartition des gaz. Le gaz est évacué de la zone d'oxychloration par la conduite (21), passe avantageusement dans l'échangeur (15), avant d'être acheminé dans une zone de lavage (22). Le gaz lavé peut être ensuite rejeté à l'atmosphère par la conduite (23) ou de façon plus générale évacué hors de l'installation.

D'une façon préférée, on dispose une conduite (18) reliée à la conduite (14) pour amener le gaz contenant de l'oxygène dans la zone de calcination, de préférence la conduite (18) est placée après le four (16). On observera que dans le cas de la figure 1, les gaz introduits par les conduites (17) et (18) ont sensiblement la même teneur en oxygène.

Le mode de réalisation figure 1 correspond à une gestion optimisée des gaz avec utilisation des gaz issus de la combustion en zone de calcination. On aurait pu tout aussi bien amener de l'air séché et réchauffé directement dans la zone de calcination c'est-à-dire sans fractionner le gaz réchauffé dans le four (16). Ce gaz est donc au moins en partie envoyé dans la zone d'oxychloration.

Un autre mode de réalisation est présenté figure 2 qui se distingue de celui de la figure 1 par les équipements placés sur les conduites (sécheurs, fours, échangeurs...).

Cette figure est donnée pour illustrer la posibilité de faire varier les agencements d'équipements et de conduites dans le cadre de l'invention.

On reconnaît la conduite 5 d'évacuation des gaz issus de la combustion qui débouche sur un ballon de lavage (6). Après lavage, le gaz est fractionné en une partie qui retourne à la zone de combustion par une conduite (9), les équipements surcette conduite ne sont pas représentés. L'autre partie évacuée par la conduite (10) est additionnée d'oxygène (air) comprimé (par le compresseur (12)) amené par la conduite (11).

Le gaz chargé en oxygène passe dans un échangeur (25), un sécheur (26), un échangeur (15) et un four (16). Après réchauffage, le gaz est divisé en un flux partant par une conduite (17) vers la zone d'oxychloration avec ajout d'agent chlorant par la conduite (19) et d'eau par la conduite (20). L'autre flux va par la conduite (18) vers la zone de calcination.

L'effluent issu de l'oxychloration est évacué par la conduite (21), passe dans l'échangeur (15), un refroidisseur (27), un ballon de lavage (22) et est envoyé à l'atmosphère par la conduite (23).

Ainsi dans ces modes de réalisation, la conduite (5) d'évacuation des gaz issus de la combustion débouche dans une zone de lavage (6) des dits gaz, et une conduite (9) recycle une partie des gaz lavés vers la(les) zone(s) de combustion, une conduite (10) emmène une autre partie des gaz lavés, qui additionnée d'un gaz contenant de l'oxygène amené par une conduite (11), produit un gaz contenant de l'oxygène introduit au moins en partie dans une zone d'oxychloration (B) par une conduire (17).

De façon préférée pour introduire un gaz homogène, dans la conduite (17) arrivent au moins une conduite (19) amenant au moins un agent chlorant et une conduite (20) amenant l'eau, de façon à ce qu'il entre par la conduite (17) dans la zone d'oxychloration un gaz comprenant l'eau, au moins un agent chlorant et de l'oxygène.

On notera que les réalisations présentées se font sans boucle de recyclage des gaz d'oxychloration. L'intérêt de l'invention apparaît clairement dans l'exemple suivant.

### Exemple

Un débit de 800 kg/h de catalyseur contenant 6,25 % poids de coke. La combustion nécessite une boucle 16000 kg/h de gaz et une purgé d'environ 700 kg/h est entièrement utilisée pour le gaz de calcination et d'oxychloration. Le gaz de purge et l'air formeront un gaz de calcination et d'oxychloration de 3100 kg/h contenant 17 % en volume d'oxygène. L'oxygène et le gaz de purge ont été séchés préalablement de manière à obtenir une fraction massique en H₂O inférieure à 50 ppm mole. Le gaz est séparé en 2 parties : 1550 kg/h iront par la conduite au bas de la zone de calcination et 1550 kg/h seront injectés en bas du lit d'oxychloration après addition de l'agent chlorant et de vapeur dans ladite conduite. Il sera injecté, par exemple, un débit d'agent chlorant correspondant à 12 kg/h de chlore et 60 kg/h de vapeur d'eau. Le catalyseur séjourne 1,5 h dans la zone d'oxychloration et 0,5 h dans la zone de calcination. L'efficacité du traitement oxychlorant est évaluée en comparant l'état de dispersion de la phase métallique d'échantillons de catalyseur prélevés à l'entrée le la zone d'oxychloration à celui d'échantillons prélevés à la sortie de zone de calcination. L'état de dispersion de la phase métallique du catalyseur est déterminée quantitativement par la technique de chimisorption H₂/O₂. Les résultats obtenus montrent que la dispersion de la phase métallique des échantillons prétevés en sortie de la calcination est en moyenne supérieure de 18 % à celle des échantillons prélevés à l'entrée de l'oxychloration. La teneur en chlore des échantillons de catalyseur prélevés en sortie est égale à 1,10 % poids.

## Revendications

1. Procédé de régénération en lit mobile d'un catalyseur de production d'hydrocarbures aromatiques ou de reformage, comprenant un support, au moins un métal noble et du chlore, et comprenant les étapes successives de combustion, oxychloration et calcination, dans lequel l'étape d'oxychloration se déroule en présence d'un gaz d'oxychloration contenant moins de 21 % d'oxygène et au moins 50 ppm poids de chlore (calculé HCl), et à une température de 350-600 °C, procédé **caractérisé en ce que** il est introduit pour l'étape d'oxychloration au moins un agent chlorant, au moins un gaz contenant de l'oxygène, et de l'eau tel que le rapport molaire H2O/HCl soit de 3 à 50, et que dans la zone de calcination il est introduit un gaz contenant de l'oxygène et moins de 50 ppm mole d'eau.

2. Procédé selon la revendication 1, **caractérisé en ce que** le rapport molaire H₂O/HCl est de 7 à 50.

3. Procédé selon l'une des revendications précédentes, **caractérisé en ce que** la teneur en eau du gaz d'oxychloration est d'au moins 10000 ppm poids.

4. Procédé selon l'une des revendications précédentes, **caractérisé en ce que** lateneuren chlore (HCl) du gaz d'oxychloration est de 50-8000 ppm poids.

5. Procédé selon l'une des revendications précédentes, **caractérisé en ce que** la teneur en chlore (HCl) du gaz au contact du catalyseur est de 1000-8000 ppm poids.

6. Procédé selon l'une des revendications précédentes, **caractérisé en ce que** la teneur en oxygène du gaz au contact du catalyseur est de plus de 10 % (volume) à moins de 21 % (volume).

7. Procédé selon l'une des revendications précédentes, **caractérisé en ce que** la température dans l'étape d'oxychloration est de 490-530 °C.

8. Procédé selon l'une des revendications précédentes, **caractérisé en ce que** le temps de séjour du catalyseur dans l'étape d'oxychloration est de 45 mn - 2 h.

9. Procédé selon l'une des revendications précédentes, **caractérisé en ce que** le gaz contenant de l'oxygène comprend une partie des gaz issus de l'étape de combustion additionnée d'un appoint en oxygène.

10. Procédé selon l'une des revendications précédentes, **caractérisé en ce que** chaque étape du procédé se déroule dans au moins une zone différente, le catalyseur s'écoulant d'une zone à autre.

11. Procédé selon l'une des revendications précédentes dans lequel les gaz issus de la combustion et les gaz issus de l'oxychloration sont extraits séparément, et pour éviter le mélange de ces gaz, il est disposé une plaque ou autre moyen pour séparer les zones de combustion et d'oxychloration.

12. Procédé selon l'une des revendications précédentes, **caractérisé en ce que** le gaz d'oxychloration résulte du mélange du gaz provenant de la zone dans laquelle se déroule l'étape de calcination, avec l'(les) agent(s) chlorant(s), l'eau et le(s) gaz contenant de l'oxygène introduits dans la zone dans laquelle se déroule l'étape d'oxychloration, le(s) gaz contenant de l'oxygène comprenant une partie des gaz issus de la combustion additionnée d'un appoint en oxygène, et que le gaz introduit dans la zone de calcination est de l'air ou un gaz formé d'une partie des gaz issus de la combustion lavée, séchée et additionnée d'un appoint en oxygène.

13. Procédé selon l'une des revendications 1 à 12, **caractérisé en ce que** les gaz issus de la zone d'oxychloration sont évacués hors de l'installation sans être recyclés,

14. Procédé selon l'une des revendications précédentes, dans lequel il est introduit dans l'étape d'oxychloration un gaz contenant de l'oxygène qui comprend au moins une partie des gaz issus de l'étape de combustion lavée, séchée et additionnée d'oxygène.

15. Procédé selon la revendication 14, dans leque il est additionné d'air séché.

16. Enceinte pour la régénération de catalyseur de reformage ou de production d'aromatiques renfermant un support, au moins un métal noble et du chlore, le catalyseur étant sous forme de lit mobile, ladite enceinte comportant au moins une zone de combustion (A) munie d'au moins une conduite (9) pour l'introduction de gaz contenant de l'oxygène et d'au moins une conduite (5) pour l'évacuation des gaz issus de la combustion, au moins une zone d'oxychloration (B) et au moins une zone de calcination (C) munie d'au moins une conduite (18) pour l'introduction d'un gaz contenant de l'oxygène, ladite enceinte comportant également au moins une conduite (1) pour l'introduction du catalyseur dans l'enceinte, au moins une conduite (3) pour l'introduction du catalyseur issu de la combustion dans la zone suivante d'oxychloration (B), et au moins une conduite (21) pour l'évacuation des gaz issus de l'oxychloration, **caractérisée en ce que** la zone d'oxychloration comprend au moins un moyen (17) pour introduire un gaz contenant de l'oxygène, moyen dans lequel arrivent au moins une conduite (19) amenant au moins un agent chlorant et au moins une conduite (20) amenant l'eau, de façon à ce qu'il entre par la conduite (17) dans la zone d'oxychloration un gaz comprenant l'eau, au moins un agent chlorant et de l'oxygène, et qu'il est disposé une plaque ou autre moyen pour séparer les zones de combustion et d'oxychloration pour éviter le mélange des gaz issus de la combustion et des gaz issus de l'oxychloration.

17. Enceinte selon la revendication 16, **caractérisée en ce que** la conduite (5) d'évacuation des gaz issus de la combustion débouche dans une zone de lavage (6) des dits gaz, et qu'une conduite (9) recycle une partie des gaz lavés vers la(les) zone(s) de combustion, une conduite (10) emmène une autre partie des gaz lavés, qui additionnée d'un gaz contenant de l'oxygène amené par une conduite (11), produit un gaz contenant de l'oxygène introduit au moins en partie dans une zone d'oxychloration (B) par une conduire (17).

18. Enceinte selon la revendication 16 ou 17, dans laquelle les gaz de combustion sont lavés et séchés dans un sécheur (7).

19. Enceinteselon l'une des revendications 16 à 18, **caractérisé en ce que** il est disposé un four (16) sur la conduite (14) amenant une partie au moins des gaz de combustion additionnée d'oxygène à la zone d'oxychloration.

20. Enceinte selon l'une des revendications 16 à 19, **caractérisé en ce que** les gaz issus de la combustion, lavés, passent dans un sécheur (7) puis un compresseur (8) et sont ensuite divisés en une partie recyclée vers le (les) zone(s) de combustion par la conduite (9), l'autre partie est additionnée d'un gaz contenant de oxygène par une conduite (11) et est réchauffée dans un four (16) pour être au moins en partie introduite dans la zone d'oxychloration (B).

21. Enceinte selon l'une des revendications 16 à 20, **caractérisée en ce que** le gaz amené par la conduite (14) est fractionné en une partie introduite par le conduite (17) en zone 5 d'oxychloration (B) et une partie introduite par la conduite (18) en zone de calcination (C).

22. Enceinte selon l'une des revendications 16 à 21, **caractérisée en ce qu'**elle comporte une zone de traitement (22) des gaz issus de l'oxychloration évacués parla(les) conduite(s) (21) puis un moyen (23) pour les évacuer hors de l'installation.

23. Enceinte selon l'une des revendications 16 à 22, **caractérisée en ce que** les zones de calcination et d'oxychloration sont axiales.

24. Enceinte selon l'une des revendications 16 à 23, **caractérisée en ce que** les zones de calcination et oxychloration axiales forment un lit unique et que des déflecteurs (24) sont 10 disposés dans le lit au niveau de la conduite (17) introduisant le gaz dans la zone d'oxychloration.

25. Enceinte selon l'une des revendications 17 à 24, **caractérisée en ce qu'** elle comporte une conduite (11) munie d'un secheur (13) précédé d'un compresseur (12) pour additionner de l'oxygène sec au gaz dans la conduite (10).

26. Enceinte selon l'une des revendications 16 à 25, **caractérisée en ce qu**'elle comporte un moyen de séparation entre les zones de combustion et la zone d'oxychloration, permettant de laisser passer le catalyseur mais pas les gaz.

## Patentansprüche

1. Verfahren zur Regenerierung in einem beweglichen Bett eines Reformierungskatalysators oder eines Katalysators zur Herstellung aromatischer Kohlenwasserstoffe, der einen Träger, wenigstens ein Edelmetall und Chlor umfasst und die folgenden Stufen der Verbrennung, Oxichlorierung und Kalzinierung aufweist, bei dem die Stufe der Oxichlorierung in Anwesenheit eines Oxichlorierungsgases abläuft, das wenigstens 21 % Sauerstoff und wenigstens 50 Gew.-ppm Chlor (berechnet als HCl) enthält, und dies bei einerTemperatur von 350 bis 600°C, **dadurch gekennzeichnet, dass** für die Oxichlorierungsstufe wenigstens ein Chlorierungsmittel, wenigstens ein Sauerstoff enthaltendes Gas und Wasser eingeführt werden, derart, dass das Molverhältnis H₂O/HCl bei 3 bis 50 liegt, und dass ein Gas, das Sauerstoff und weniger als 50 mol-ppm Wasser enthält, in die Kalzinierungszone eingeführt wird.

2. Verfahren nach Anspruch 1, **dadurch gekennzeichnet, dass** das Molverhältnis H₂O/HCl bei 7 bis 50 liegt.

3. Verfahren nach einem der vorhergehenden Ansprüche, **dadurch gekennzeichnet, dass** der Wassergehalt des Oxichlorierungsgases bei wenigstens 10000 Gew.-ppm liegt.

4. Verfahren nach einem der vorhergehenden Ansprüche, **dadurch gekennzeichnet, dass** der Chlorgehalt (HCl) des Oxichlorierungsgases bei 50 bis 8000 Gew.-ppm liegt.

5. Verfahren nach einem der vorhergehenden Ansprüche, **dadurch gekennzeichnet, dass** der Chlorgehalt (HCl) des Gases in Kontakt mit dem Katalysator bei 1000 bis 8000 Gew.-ppm liegt.

6. Verfahren nach einem der vorhergehenden Ansprüche, **dadurch gekennzeichnet, dass** der Sauerstoffgehalt des Gases in Kontakt mit dem Katalysator zwischen mehr als 10 (Volumen)-% und weniger als 21 (Volumen)-% liegt.

7. Verfahren nach einem der vorhergehenden Ansprüche, **dadurch gekennzeichnet, dass** die Temperatur in der Oxichlorierungsstufe bei 490 bis 530°C liegt.

8. Verfahren nach einem der vorhergehenden Ansprüche, **dadurch gekennzeichnet, dass** die Verweilzeit des Katalysators in der Oxichlorierungsstufe bei 45 mn bis 2 h liegt.

9. Verfahren nach einem der vorhergehenden Ansprüche, **dadurch gekennzeichnet, dass** das Sauerstoff enthaltende Gas einen Teil der aus der Verbrennungsstufe stammenden Gase mit einem Sauerstoffzusatz umfasst.

10. Verfahren nach einem der vorhergehenden Ansprüche, **dadurch gekennzeichnet, dass** jede Stufe des Verfahrens in wenigstens einer unterschiedlichen Zone abläuft, wobei der Katalysator von einer Zone zur anderen fließt.

11. Verfahren nach einem der vorhergehenden Ansprüche, bei dem die aus der Verbrennung stammenden Gase und die aus der Oxichlorierung stammenden Gase getrennt extrahiert werden, wobei eine Platte oder andere Einrichtung zum Trennen der Verbrennungszone von der Oxichlorierungszone vorgesehen wird, um das Vermischen dieser Gase zu vermeiden.

12. Verfahren nach einem der vorhergehenden Ansprüche, **dadurch gekennzeichnet, dass** das Oxichlorierungsgas resultiert aus dem Vermischen des aus der Zone stammenden Gases, in der die Kalzinierungsstufe abläuft, mit dem oder den Chlorierungsmittel(n), dem Wasser und dem (den) Sauerstoff enthaltenden Gas(en), die in die Zone eingeführt werden, in der die Oxichlorierungsstufe abläuft, wobei das (die) Sauerstoff enthaltenden Gas(e) einen Teil der aus der Verbrennung stammenden Gase unter Zusatz von Sauerstoff umfassen, und dass das in die Kalzinierungszone eingeführte Gas Luft oder ein Gas ist, das aus einem Teil der aus der Verbrennung stammenden Gase, gewaschen, getrocknet und unter Zugabe von Sauerstoff, gebildet ist.

13. Verfahren nach einem der Ansprüche 1 bis 12, **dadurch gekennzeichnet, dass** die aus der Oxichlorierungszone stammenden Gase aus der Anlage, ohne rezykliert zu werden, abgezogen werden.

14. Verfahren nach einem der vorhergehenden Ansprüche, bei dem in die Oxichlorierungsstufe ein Sauerstoff enthaltendes Gas eingeführt wird, das wenigstens einen Teil der aus der Stufe der Verbrennung stammenden Gase, gewaschen, getrocknet und unter Sauerstoffzusatz, umfasst.

15. Verfahren nach Anspruch 14, bei dem trockene Luft zugegeben wird.

16. Gefäß für die Regenerierung eines Reformierungskatalysator oder eines Katalysators zur Produktion von Aromaten, umfassend einen Träger, wenigstens ein Edelmetall und Chlor, wobei der Katalysator in Form eines beweglichen Bettes vorliegt und das Gefäß wenigstens eine Verbrennungszone (A), versehen mit wenigstens einer Leitung (9) zum Einführen von Sauerstoff enthaltendem Gas und wenigstens einer Leitung (5) zum Abzug der aus der Verbrennung stammenden Gase, wenigstens eine Oxichlorierungszone (B) und wenigstens eine Kalzinierungszone (C), versehen mit wenigstens einer Leitung (18) zum Einführen von Sauerstoff enthaltendem Gas, umfasst, wobei das Gefäß außerdem wenigstens eine Leitung (1) zum Einführen von Katalysator in das Gefäß, wenigstens eine Leitung (3) zum Einführen des aus der Verbrennung stammenden Katalysators in die folgende Oxichlorierungszone (B) und wenigstens eine Leitung (21) zum Abzug der aus der Oxichlorierung stammenden Gase aufweist, **dadurch gekennzeichnet, dass** die Oxichlorierungszone wenigstens ein Mittel (17) zum Einführen eines Sauerstoff enthaltenden Gases umfasst, ein Mittel, in welchem wenigstens eine Leitung (19), die wenigstens ein Chlorierungsmittel zuführt, und wenigstens eine Leitung (20), die Wasser zuführt, ankommen, derart, dass über die Leitung (17) in die Oxichlorierungszone ein Gas eintritt, welches Wasser, wenigstens ein Chlorierungsmittel und Sauerstoff umfasst, und dass eine Platte oder eine andere Einrichtung zur Trennung der Verbrennungszone von der Oxichlorierungszone vorgesehen ist, um das Vermischen der aus der Verbrennung stammenden Gase mit den aus der Oxichlorierung stammenden Gasen zu vermeiden.

17. Gefäß nach Anspruch 16, **dadurch gekennzeichnet, dass** die Leitung (5) zum Abzug der aus der Verbrennung stammenden Gase in eine Waschzone (6) für diese Gase mündet, und dass eine Leitung (9) einen Teil der gewaschenen Gase in die Verbrennungszone(n) rezykliert, wobei eine Leitung (10) einen anderen Teil der gewaschenen Gase abführt, dem ein Gas zugesetzt wird, welches über eine Leitung (11) herangeführten Sauerstoff enthält und ein Gas erzeugt, welches Sauerstoff enthält, der wenigstens zum Teil in eine Oxichlorierungszone (B) über eine Leitung (17) eingeführt wurde.

18. Gefäß nach Anspruch 16 oder 17, bei dem die Verbrennungsgase gewaschen und in einem Trockner (7) getrocknet werden.

19. Gefäß nach einem der Ansprüche 16 bis 18, **dadurch gekennzeichnet, dass** ein Ofen (16) an der Leitung (14) angeordnet ist, der wenigstens einen Teil der Verbrennungsgase unter Zugabe von Sauerstoff zur Oxichlorierungszone führt.

20. Gefäß nach einem der Ansprüche 16 bis 19, **dadurch gekennzeichnet, dass** die aus der Verbrennung stammenden gewaschenen Gase in einen Trockner (7), dann in einen Kompressor (8) gehen und anschließend in einen in die Verbrennungszone über die Leitung (9) rezyklierten Teil und in einen anderen Teil unterteilt werden, unter Zusatz über eine Leitung (11) eines Sauerstoff enthaltenden Gases und Erhitzung in einem Ofen (16), um wenigstens zum Teil in die Oxichlorierungszone (B) eingeführt zu werden.

21. Gefäß nach einem der Ansprüche 16 bis 20, **dadurch gekennzeichnet, dass** das über die Leitung (14) zugeführte Gas in einen Teil, der über die Leitung (17) in die Oxichlorierungszone (B) eingeführt wird, und in einen Teil fraktioniert wird, der über die Leitung (18) in eine Kalzinierungszone (C) eingeführt wird.

22. Gefäß nach einem der Ansprüche 16 bis 21, **dadurch gekennzeichnet, dass** es eine Behandlungszone (22) für die aus der Oxichlorierung stammenden Gase, abgezogen über die Leitung(en) (21), dann ein Mittel (23), umfasst, um sie aus der Anlage abzuziehen.

23. Gefäß nach einem der Ansprüche 16 bis 22, **dadurch gekennzeichnet, dass** die Kalzinierungs- und Oxichlorierungszonen axial sind.

24. Gefäß nach einem der Ansprüche 16 bis 23, **dadurch gekennzeichnet, dass** die axialen Kalzinierungs- und Oxichlorierungszonen ein einziges Bett bilden und dass Deflektoren (24) im Bett in Höhe der Leitung (17) angeordnet sind, die das Gas in die Oxichlorierungszone einführen.

25. Gefäß nach einem der Ansprüche 17 bis 24, **dadurch gekennzeichnet, dass** es eine Leitung (11) umfasst, die mit einem Trockner (13), dem ein Kompressor (12) vorhergeht, versehen ist, um trockenen Sauerstoff dem Gas in der Leitung (10) zuzusetzen.

26. Gefäß nach einem der Ansprüche 16 bis 25, **dadurch gekennzeichnet, dass** es ein Mittel zur Trennung zwischen den Verbrennungs- und Oxichlorierungszonen umfasst, das es ermöglicht, den Katalysator, jedoch nicht die Gase, durchzulassen.

## Claims

1. A process for regenerating in a moving bed a catalyst for aromatic hydrocarbon production or for reforming, the catalyst comprising a support, at least one noble metal and chlorine, the process comprising successive combustion, oxychlorination and calcination steps, in which the oxychlorination step is carried out in the presence of an oxychlorination gas containing less than 21 % of oxygen and at least 50 ppm by weight of chlorine (based on HCl), at a temperature of 350-600°C, the process being **characterized in that** at least one chlorinating agent, at least one oxygen-containing gas and water are introduced into the oxychlorination step, such that the H₂O/HCl molar ratio is 3 to 50, and that a gas containing oxygen and less than 50 mole ppm of water is introduced into the calcination zone.

2. A process according to claim 1, **characterized in that** the H₂O/HCl molar ratio is 7 to 50.

3. A process according to claim 1 or claim 2, **characterized in that** the water content of the oxychlorination gas is at least 10000 ppm by weight.

4. A process according to any one of the preceding claims, **characterized in that** the chlorine (HCl) content of the oxychlorination gas is 50 to 8000 ppm by weight.

5. A process according to any one of the preceding claims, **characterized in that** the chlorine (HCl) content of the gas in contact with the catalyst is 1000 to 8000 ppm by weight.

6. A process according to any one of the preceding claims, **characterized in that** the oxygen content of the gas in contact with the catalyst is from more than 10% (by volume) to less than 21% (by volume).

7. A process according to any one of the preceding claims, **characterized in that** the temperature in the oxychlorination step is from 490 to 530°C.

8. A process according to any one of the preceding claims, **characterized in that** the residence time of the catalyst in the oxychlorination step is from 45 minutes to 2 hours.

9. A process according to any one of the preceding claims, **characterized in that** the oxygen-containing gas comprises a portion of the gases from the combustion step with an added oxygen makeup.

10. A process according to any one of the preceding claims, **characterized in that** each step of the process is carried out in at least one different zone, the catalyst flowing from one zone to the other.

11. A process according to any one of the preceding claims, in which gases from the combustion step and gases from the oxychlorination step are separately extracted, wherein a plate or other means is provided for separating the combustion zone from the oxychlorination zone in order to avoid mixing of these gases.

12. A process according to any one of the proceding claims, **characterized in that** the oxychlorination gas results from mixing the gas originating from the zone in which the calcination step is carried out with the chlorinating agent(s), water and the oxygen-containing gas(es) introduced into the zone in which the oxychlorination step is carried out, the oxygen-containing gas(es) comprising a portion of the gases from the combustion step with an additional oxygen makeup, and **in that** the gas introduced into the calcination zone is air or a gas formed from a portion of the gases from the combustion step which have been washed, dried and added with an oxygen makeup.

13. A process according to any one of claims 1 to 12, **characterized in that** the gases from the oxychlorination zone are evacuated from the unit without being recycled.

14. A process according to any one of the preceding claims, in which an oxygen-containing gas is introduced into the oxychlorination zone, which contains at least a portion of the gases from the combustion step washed, dried and with additional makeup oxygen.

15. A process according to claim 14, in which dry air is added.

16. A vessel for regenerating a catalyst for reforming or for aromatic compound production comprising a support, at least one noble metal and chlorine, the catalyst being in the form of a moving bed, said vessel comprising at least one combustion zone (A) provided with at least one conduit (9) for introducing oxygen-containing gas and at least one conduit (5) for evacuating gases from the combustion step, at least one oxychlorination zone (B) and at least one calcination zone (C) provided with at least one conduit (18) for introducing an oxygen-containing gas, said vessel also comprising at least one conduit (1) for introducing catalyst into the vessel, at least one conduit (3) for introducing catalyst from the combustion zone into the following oxychlorination zone (B), and at least one conduit (21) for evacuating gases from the oxychlorination step, the vessel being **characterized in that** the oxychlorination zone comprises at least one means (17) for introducing an oxygen-containing gas, means in which come in at least one conduit (19) for introducing at least one chlorinating agent and at least one conduit (20) for introducing water so that a gas containing water, at least one chlorinating agent and oxygen enter in the oxychlorination zone via conduit (17), and that a plate or other means is provided for separating the combustion zone from the oxychlorination zone in order to avoid mixing of the gases issuing from the combustion with the gases issuing from the oxychlorination.

17. A vessel according to claim 16, **characterized in that** the conduit (5) for evacuating the gases from the combustion step open into a washing zone (6) for the gases, and a conduit (9) recycles a portion of the washed gases to the combustion zone(s), a conduit (10) leads away a further portion of the washed gas which, with additional oxygen-containing gas supplied via a conduit (11), produces an oxygen-containing gas, at least a portion of which is introduced into an oxychlorination zone (B) via a conduit (17).

18. A vessel according to claim 16 or 17 in which the gases from combustion are washed and dried in a drier (7).

19. A vessel according to any one of claims 16 to 18, **characterized in that** a oven (16) is located in conduit (14) carrying at least a portion of combustion gases with additional oxygen to oxychlorination zone.

20. A vessel according to any one of claims 16 to 19, **characterized in that** the gases from the combustion step, which have been washed, pass into a drier (7), then a compressor (8) and are then divided into a portion which is recycled to the combustion zone(s) via conduit (9), the other portion having added to it an oxygen-containing gas via conduit (11) and being reheated in an oven (16) to be introduced at least in part into the oxychlorination zone (B).

21. A vessel according to any one of claims 16 to 20, **characterized in that** the gas supplied via conduit (14) is fractionated into a portion introduced via conduit (17) into the oxychlorination zone (B) and a portion introduced into calcining zone (C) via conduit (18).

22. A vessel according to any one of claims 16 to 21, **characterized in that** it comprises a zone (22) for treating the gases from the oxychlorination step evacuated via conduit(s) (21), then a means (23) for evacuating them from the unit.

23. A vessel according to any one of claims 16 to 22, **characterized in that** the calcination and oxychlorination zones are axial.

24. A vessel according to any one of claims 16 to 23, **characterized in that** the axial calcination and oxychlorination zones form a single bed and **in that** deflectors (24) are located in the bed at the level of the conduit (17) introducing the gas into the oxychlorination zone.

25. A vessel according to any one of claims 17 to 24, **characterized in that** it comprises a conduit (11) provided with a drier (13) preceded by a compressor (12) for adding dry oxygen to the gas in conduit (10).

26. A vessel according to any one of claims 16 to 25, **characterized in that** it comprises separation means between the combustion zones and the chlorination zone which allows to pass the catalyst but not the gases.
